# EUROPÄISCHE PATENTANMELDUNG

(11) **EP 4 245 672 A1**
(43) Veröffentlichungstag der Anmeldung: **20.09.2023**
(21) Anmeldenummer: 23156089.7
(22) Anmeldetag: 10.02.2023
(51) Int. Cl.: B65B 21/00, B65B 21/18, B65B 35/36, B65B 59/00, F16M 1/00, F16P 1/00, B65B 59/04, F16M 1/026, B25J 21/00, B65B 35/16

(54) **VERPACKUNGS-MASCHINE**

(30) Priorität: 17.02.2022 DE 102022103828
(71) Anmelder: Gerhard Schubert GmbH, 74564 Crailsheim (DE)
(72) Erfinder: Gehring, Lorenz, 76133 Karlsruhe (DE); Schäfer, Luisa, 76275 Ettlingen (DE); Kull, Pascall, 76149 Karlsruhe (DE); Wirth, Jannik, 76135 Karlsruhe (DE); Taghavian, Kurosch, 76135 Karlsruhe (DE); Jäcklein, Philipp, 76131 Karlsruhe (DE); Ben Salem, Achraf, 91583 Schillingsfürst (DE); Schuster, Manuel, 74575 Schrozberg (DE); Yangui, Oussama, 74564 Crailsheim (DE)
(74) Vertreter: Weickmann & Weickmann PartmbB

(57) **Zusammenfassung**

Verpackungsmaschinen (100), insbesondere Umsetzstraßen zum Umsetzen von Produkten (26) in Behälter (20) mittels Robotern (204, benötigen je nach zu handhabendem Produkt (26) andere Greifwerkzeuge an den Robotern (204). Statt die Greifwerkzeuge manuell zu wechseln, erfolgt der Wechsel automatisch, indem das benötigte Werkzeug in einem Werkzeug-Puffer (200) zwischengelagert ist und bei notwendigem Werkzeugwechsel alle Roboter (204) quasi gleichzeitig den Werkzeugwechsel im Zusammenspiel mit dem Werkzeug-Puffer (200) an ihrer Längsposition der Verpackungsmaschine (100) durchführen, während das Nachladen des Werkzeug-Puffers (200) danach zeitversetzt hintereinander manuell oder von einem Lieferfahrzeug (300) während des Betriebs der Verpackungsmaschine (100) durchgeführt werden kann.

## Beschreibung

### I. Anwendungsgebiet

Die Erfindung betrifft Verpackungs-Maschinen wie etwa Umsetzstraßen und ein Verfahren zu ihrem Betreiben, insbesondere zum automatischen wechseln des Werkzeuges am Roboter.

### II. Technischer Hintergrund

Eine sehr häufige Bauform von Verpackungsmaschinen sind Umsetzstraßen, bei denen Produkte von einem Roboterarm von einer Position auf eine andere umgesetzt werden.

Je nach Anwendungszweck sind die Roboterarme unterschiedlich stark dimensioniert und besitzen die benötigte Anzahl an Freiheitsgraden.

Zum Beispiel werden einzelne, meist kleine und leichte Produkte auf einem Produktförderer herantransportiert, und mittels so genannter Picker, also gesteuerten Roboterarmen mit Greifern an ihrem freien Ende, in die auf einem Behälter-Förderer transportierten Behälter und dort in meist genau definierte Aufnahmepositionen umgesetzt.

Diese als Picker bezeichneten Roboter können im einfachsten Fall als GreifWerkzeug einen kleinen Saugkopf tragen, mit dem kleine Einzelprodukte, z. B. Pralinen, aufgenommen, gegebenenfalls um ihre Hochachse (Z) gedreht und definiert an anderer Stelle (X- und/oder Y-Versatz) wieder abgesetzt werden können (F4-Roboter).

Wenn es sich bei den Einzelprodukten jedoch um größere und schwerere Produkte handelt, beispielsweise gefüllte Bierflaschen oder gar Sixpacks von Bierflaschen, ist der Roboterarm wesentlich stärker dimensioniert und mit einem größeren und schwereren Werkzeug zur Aufnahme der Produkte, ausgestattet, welches die Produkte formschlüssig ergreift. Der Roboterarm ist hierfür unter Umständen nur in Y- und Z-Richtung beweglich (F2-Roboter).

Nicht selten kommen in einer Umsatzstraße sowohl F2-als auch F4-Roboter, aber auch F3, T4 oder T5-Roboter vor.

Die vorliegende Erfindung ist auf beide Arten von Robotern anwendbar.

Wenn nun eine solche Umsetzstraße auf das Abpacken eines neuen Produktes umgestellt werden soll, müssen hierfür in aller Regel die Werkzeuge, also die Arbeitsköpfe der Roboter oder Picker, gewechselt werden gegen solche Werkzeuge, die an das neue Produkt angepasst sind.

Das Ankoppeln und Abkoppeln der Werkzeuge am Roboter kann beim Werkzeugwechsel automatisch oder manuell geschehen, jedoch erfolgt zumindest das Abnehmen und Weglegen des alten Werkzeuges und Heranbringen des neun Werkzeuges manuell, was angesichts eines Gewichts des Werkzeuges von 15 kg und mehr bei großen Robotern häufig auch arbeitsrechtliche Probleme aufwirft, da bei zu hohem Gewicht des Werkzeuges der Wechsel beispielsweise aufgrund von Arbeitsschutz-rechtlichen Bestimmungen nicht mehr von Frauen durchgeführt werden darf.

Des Weiteren bewirkt dieser manuelle Wechsel eine relative lange Umstellungszeit für die Umsetzstraße.

In diesem Zusammenhang sind Werkzeug-Magazine nahe am oder in dem Arbeitsbereich der Verpackungsmaschine durchaus bekannt. So zeigt beispielsweise die DE 10 2011 015 741 B4 eine Lösung, bei der an einer Längsposition der Umsetzstraße ein Werkzeug-Magazin im Arbeitsraum vorhanden ist und für einen Wechselvorgang von einem dortigen speziellen Wechsel-Roboter ein Werkzeug entnommen und auf ein Fördermittel - dort schienengeführte Schlitten, auf denen sonst die zu füllenden Behälter transportiert werden - gesetzt werden, die das spezifische Werkzeug zu dem jeweiligen Roboter transportieren, der es von diesem Transport-Schlitten selbstständig abnimmt durch Ergreifen, Ankoppeln und Abheben.

Dabei ist das Ankoppeln und die entsprechenden Kupplungen regelmäßig so ausgebildet, dass durch das mechanische, in aller Regel formschlüssige, koppeln des Werkzeuges an den Roboter-Arm auch alle notwendigen Medien-Verbindungen (Energie-Verbindungen, Daten-Verbindungen) mit gekoppelt werden.

Allerdings erfolgt auch bei dieser Lösung das Zuführen der neuen Werkzeuge zu dem jeweiligen Roboter seriell, also Roboter für Roboter, und dementsprechend benötigt der Wechselvorgang Zeit, da die Roboter nicht alle zeitgleich den Ankoppel-Vorgang sowie das Aufnehmen des neuen Werkzeuges und zuvor natürlich das Ablegen des alten Werkzeuges auf diesem oder einem anderen vorhergehenden, leeren Transport-Schlitten, durchgeführt werden kann.

Darüber hinaus sind Werkzeug-Magazine bekannt, die eine relativ große Anzahl von Werkzeugen innerhalb des Arbeitsbereiches des jeweiligen Roboters vorhalten, also im Arbeitsraum, was den Nachteil hat, dass die dort gelagerten Werkzeuge ständig den dort auftretenden Verschmutzungen ausgesetzt sind.

Vor allem aber liegt ein solches Werkzeug-Magazin in dem durch Sicherheits-Wände und Sicherheits-Türen gebildeten Sicherheit-Gehäuse der Verpackungsmaschine und auch des jeweiligen Roboters, sodass während des laufenden Betriebes das Werkzeug-Magazin, beispielsweise nicht neu von außen befüllt werden kann oder dort Werkzeuge nach außen entnommen werden können.

Ferner ist hierfür sehr viel Platz im Arbeitsraum des Roboters notwendig, was den Arbeitsraum pro Roboter erhöht und damit die gesamte Verpackungs-Maschine größer wird.

### III. Darstellung der Erfindung

### a) Technische Aufgabe

Es ist daher die Aufgabe gemäß der Erfindung, eine Verpackungsmaschine, die Roboter aufweist, insbesondere eine Umsetzstraße, zur Verfügung zu stellen, bei der das Umrüsten der Verpackungsmaschine auf ein neues zu handhabendes Produkt sehr schnell vor sich geht und insbesondere mannlos vor sich geht, sowie ein entsprechendes Wechsel-Verfahren für Werkzeuge.

### b) Lösung der Aufgabe

Diese Aufgabe wird durch die Merkmale der Ansprüche 1 und 13 gelöst. Vorteilhafte Ausführungsformen ergeben sich aus den Unteransprüchen.

Eine gattungsgemäße Verpackungs-Maschine, auch eine Umsetz-Straße, besteht in aller Regel aus einem Maschinengestell, an dem im Wesentlichen alle anderen funktionalen Teile der Maschine befestigt sind.

Das Maschinengestell ist häufig aus in Durchlaufrichtung der Maschine hintereinander angeordneten und miteinander verbundenen Gestell-Modulen zusammengesetzt, von denen jedes vier in der Aufsicht betrachtet im Rechteck angeordnete Gestell-Säulen aufweist, die an ihren oberen Enden durch Gestell-Längsträger und Gestell-Querträger miteinander zu dem Gestell-Modul verbunden sind.

Die Verpackungs-Maschine weist ein Sicherheitsgehäuse mit in der Regel am Maschinengestell, insbesondere den Gestell-Säulen, befestigten festmontierten Sicherheitswänden und Sicherheitstüren auf, die in der Regel durchsichtig sind, und den Arbeitsraum der Verpackungsmaschine sicherheitstechnisch begrenzen.

Dies bedeutet, dass bei geschlossenen Sicherheitstüren und damit geschlossenem Sicherheitsgehäuse ein Hineingreifen oder Hineingehen in den Arbeitsraum von außen nicht möglich ist. Bei Öffnen einer der Sicherheitstüren wird die gesamte Verpackungs-Maschine automatisch sofort angehalten.

Im Inneren des Arbeitsraumes ist der mindestens eine mit einem Werkzeug bestückbare Roboter - gerade bei einer Umsetz-Straße sind eine Vielzahl von Robotern in Durchlaufrichtung durch die Maschine hintereinander vorhanden - am Grundgestell befestigt, meist an oberen Traversen hängend, befestigt, und zwar in aller Regel ortsfest.

Deshalb müssen die im folgenden beschriebenen Relativbewegungen zwischen Werkzeug-Puffer und Roboter vom Werkzeug-Puffer vollzogen werden. Sollte der Roboter mit seiner Basis beweglich am Grundgestell befestigt sein, kann zumindest ein Teil dieser Relativbewegungen auch vom Roboter vollzogen werden.

Die Sicherheits-Wände und Sicherheits-Türen erstrecken sich dabei links und rechts des Arbeitsraumes, vorzugsweise über die gesamte Länge der Verpackungs-Maschine. In Querrichtung sind Sicherheits-Wände oder eine Sicherheits-Tür nur am Anfang und Ende vorhanden, aber in aller Regel nicht zwischen den Arbeitsbereichen der einzelnen Roboter, insbesondere bei einer Umsetz-Straße für Produkte.

Erfindungsgemäß wird bei einer solchen bekannten Verpackungsmaschine die Aufgabe dadurch gelöst, dass ein Werkzeug-Puffer einen bzgl. des Arbeitsraumes des Roboters inneren, also im Arbeitsraum liegenden, sowie einen äußeren Puffer-Raum mit je einer Werkzeug-Ablage aufweist, die jeweils Platz- und Ablagemöglichkeit für je mindestens ein Werkzeug bieten.

Dabei ist der Werkzeug-Puffer so ausgebildet, dass innerer und äußerer Puffer-Raum ihre Position verändern können, insbesondere der innere Puffer-Raum ein äußerer Pufferraum werden kann, insbesondere die Position des bisherigen äußeren Puffer-Raumes einnehmen kann und umgekehrt.

Der innere Puffer-Raum beispielsweise kann zwischen einer im Greifbereich des Roboters liegenden Wechselposition und einem außerhalb dieses Greifbereichs, aber eben noch innerhalb des Arbeitsraumes, liegenden Puffer-Position hin und her bewegt werden.

Dabei weist der Werkzeug-Puffer selbst mindestens eine Sicherheits-Wand und/oder eine Sicherheits-Tür als Bestandteil des Sicherheits-Gehäuses der Verpackungs-Maschine auf. Insbesondere wird dadurch der aktuell innere, zum restlichen Arbeitsraum hin meist offene, Puffer-Raum nach außen begrenzt, sodass der außerhalb dieser Sicherheits-Wand liegende äußere Puffer-Raum sich zumindest in der Pufferposition bereits außerhalb des Sicherheits-Gehäuses befindet.

Dadurch kann der innere Puffer-Raum innerhalb des Arbeitsraumes zum Wechseln eines Werkzeuges in den Greifbereich des Roboters gebracht werden, der dann sein momentan angekoppeltes Werkzeug in dem inneren Puffer-Raum ablegt und dadurch frei ist zum Aufnehmen eines neuen Werkzeuges, welches bereits im äußeren Puffer-Raum vorab hinterlegt wurde und durch die angesprochene Veränderung der Position der Pufferräume ins Innere des Arbeitsraumes und in den Greifbereich des Roboters gebracht werden kann.

Auf diese Art und Weise können alle Roboter einer Verpackungs-Maschine gleichzeitig ihre Werkzeuge wechseln und dies muss nicht seriell geschehen.

Unter Greifbereich des Roboters wird verstanden, dass es sich hierbei nicht um den Greifbereich handelt, in dem der Roboter mit dem Werkzeug Produkte ergreifen kann, sondern derjenige Greifbereich, in dem der Roboter ohne Werkzeug daran ein Werkzeug selbsttätig durch Ankoppeln erfassen und aufnehmen kann, was meistens ein räumlich etwas geringerer Greifbereich ist.

Zum Schutz des neuen Werkzeuges im anfangs äußeren Puffer-Raum ist der Werkzeug-Puffer, insbesondere der äußere Puffer-Raum, nach außen vorzugsweise mit einer Außentür verschlossen, die aber nicht Bestandteil des Sicherheits-Gehäuses ist, sodass sie auch im laufenden Betrieb der Anlage jederzeit geöffnet und der äußere Puffer-Raum mit dem für den nächsten Arbeitsauftrag benötigten neuen Werkzeug befüllt werden kann, sofern sich der Werkzeug-Puffer in der Puffer-Position befindet, in der der äußere Puffer-Raum sich bereits außerhalb des Sicherheit-Gehäuses befindet.

Diese Außentür kann entweder an einer Sicherheits-Tür des Maschinengestells, insbesondere eines Gestell-Moduls, befestigt sein, welche einen durch diese Außentür verschließbaren Durchlass zum Hindurchbewegen eines Werkzeuges aufweist, oder am Grundgestell befestigt sein.

Bevorzugt umfasst der Werkzeug-Puffer eine Übergabestation, deren Innenraum durch ein oder mehrere Sicherheit-Wände, wovon eine auch beweglich sein kann, und/oder eine Sicherheit-Tür, insbesondere die Außentür, gegenüber dem Rest des Arbeitsraumes sicherheitstechnisch abgegrenzt werden kann, zumindest, wenn sich der bewegliche Teil des Werkzeug-Puffers, insbesondere der Puffer-Schlitten, in der Puffer-Position befindet.

Wenn sich der bewegliche Teil des Werkzeug-Puffers dagegen in der Wechsel-Position befindet, ist der Innenraum der Übergabestation in der Regel zum Arbeitsraum hin offen, und das Sicherheitsgehäuse wird durch die geschlossene Außentür des Werkzeug-Puffers, insbesondere der Übergabestation, geschlossen gehalten.

In den Innenraum der Übergabestation kann der äußere Puffer-Raum, der Bestandteil des beweglichen Teils des Werkzeug-Puffers, insbesondere des Puffer-Schlittens, ist, von der Innenseite her eingefahren werden. Mit Innenseite ist dabei die dem Arbeitsraum der Verpackungs-Maschine zugewandte Seite der Übergabestation gemeint.

Dadurch kann der äußere Puffer-Raum in der Übergabestation positioniert und dann nach Öffnen der Außentür direkt in diesem äußeren Puffer-Raum das benötigte neue Werkzeug von außerhalb der Verpackungsmaschine her abgelegt werden.

Für die Zugänglichkeit vor allem des inneren Puffer-Raumes und Erreichbarkeit durch den Roboter kann der bewegliche Teil des Werkzeug-Puffers, insbesondere der Puffer-Schlitten, vorzugsweise in Querrichtung und/oder Höhenrichtung und/oder drehbar um eine Hochachse der Verpackungs-Maschine, insbesondere Umsetz-Straße, beweglich ausgebildet sein.

Unter Durchlaufrichtung ist die Durchlaufrichtung der angelieferten Produkte durch die Verpackungs-Maschine, insbesondere Umsetz-Straße, zu verstehen, unter Querrichtung die horizontale Querrichtung hierzu.

Um den mit einem neuen Werkzeug befüllten äußeren Puffer-Raum in den Greifbereich im Inneren des Arbeitsraumes und in den Greifbereich des Roboters - die Wechsel-Position - zu bringen, können innerer und äußerer Puffer-Raum entsprechend relativ zueinander beweglich sein, vorzugsweise drehbar um eine dazwischen angeordnete aufrechte Schaltachse sein.

Zwischen innerem und äußeren Puffer-Raum befindet sich dann meist eine somit bewegliche Sicherheits-Wand, sodass nur mit sehr kurzer BetriebsUnterbrechung, der innere Puffer-Raum, in dem der Roboter bereits sein altes Werkzeug abgelegt hat, nach außen und der äußere, mit dem neuen Werkzeug bestückte Puffer-Raum nach innen, in den Arbeitsraum hinein und zum Roboter hinweisend, gedreht werden kann.

Neben dieser bevorzugten Lösung sind auch andere Relativ-Bewegungen von innerem und äußerem Puffer-Raum zueinander möglich, die den gleichen Effekt bewirken, beispielsweise durch Umlaufen der beiden Puffer-Räume um eine horizontal in Durchlaufrichtung laufende Achse wie etwa bei einem horizontalen Paternoster.

Theoretisch können innerer und äußerer Puffer-Raum auch in Durchlaufrichtung hintereinander angeordnet sein und jeder davon abwechselnd in den Greifbereich des Roboters gebracht werden, jedoch erfordert dies eine erhebliche Baulänge in Durchlaufrichtung für den Werkzeug-Puffer.

In einer bevorzugten konkreten Lösung sind innerer und äußerer Puffer-Raum beidseits einer insbesondere beweglichen Sicherheits-Wand angeordnet, die, je nach, insbesondere momentaner, Position Bestandteil des Sicherheitsgehäuses sein kann.

Die bewegliche Sicherheits-Wand - die insbesondere den inneren und den äußeren Pufferraum voneinander trennt - und die daran beidseits befestigten Werkzeug-Ablagen bilden einen Puffer-Schlitten, der gesteuert drehbar um eine aufrechte Schaltachse, in der Regel um einen Schalt-Takt von jeweils 180°, die vorzugsweise im Bereich zwischen innerem und äußerem Puffer-Raum vorhanden ist, meist nahe an oder in der Sicherheits-Wand.

Die bewegliche Sicherheits-Wand kann in der Puffer-Position eine der Sicherheit-Wände der Übergabe-Station sein.

Die weiteren Sicherheit-Wände, die den Innenraum der Übergabe-Station begrenzen, sind
- entweder direkt am Maschinengestell angeordnet
- oder an der Außentür der Übergabestation angeordnet.
- oder an der Innenseite einer Sicherheitstür des Maschinengestells angeordnet.

Bevorzugt ist Letzteres, wobei die Außentür an der Außenseite der Sicherheitstür des Maschinengestells angeordnet ist und einen Durchlass für Werkzeuge in diesen Sicherheitstüren verschließen kann.

Dabei sind die beiden Puffer-Räume und insbesondere der gesamte Puffer-Schlitten vorzugsweise von der Höhenlage her unterhalb einer in Durchlaufrichtung der Verpackungs-Maschine verlaufenden Längstraverse angeordnet, in der die Schaltachse vorzugsweise hängend gelagert ist.

Die Längstraverse ist, vorzugsweise mit ihren beiden Enden, meist in jeweils einer in Querrichtung verlaufenden Quer-Führung, die am MaschinenGestell befestigt ist, gesteuert verfahrbar. Dann ist die Längstraverse ebenfalls Bestandteil des Puffer-Schlittens.

Damit kann - nach Verbringen in eine nicht kollisionsgefährdete Dreh-Position - der äußere Puffer-Raum nach innen und gleichzeitig der innere Puffer-Raum nach außen gedreht werden, wofür zwar der Betrieb der Werkzeug-Maschine unterbrochen werden muss, um Kollisionen zu vermeiden.

Das Sicherheitsgehäuse bleibt dabei jedoch geschlossen, indem die Außentür geschlossen ist und der äußere Pufferraum nun innerhalb des Sicherheitsgehäuses liegt, im Gegensatz zur Puffer-Position des Werkzeug-Puffers, in der der äußere Puffer-Raum außerhalb des Sicherheitsgehäuses liegt, welches dann durch die zwischen den Pufferräumen angeordnete drehbare Sicherheitswand geschlossen gehalten wird.

Anschließend kann der Roboter - nachdem der innere Puffer-Raum in seinen Greifbereich verbracht wurde - das neue Werkzeug aus dem nun inneren Puffer-Raum ankoppeln und aufnehmen, aber all dies erfolgt bei allen Robotern gleichzeitig sodass die Totzeit der Maschine äußerst gering ist.

Vorzugsweise kann der eine oder beide Puffer-Räume auch eine von der Sicherheitswand des Puffer-Schlittens beabstandete, zu öffnende Innentür aufweisen zur Abtrennung vom Arbeitsraum des Roboters und um das darin bereits vorgehaltene neue Werkzeug zu schützen.

Da für die Erreichbarkeit durch den Roboter auch die Höhenlage des inneren Puffer-Raumes entscheidend sein kann, ist dieser, vorzugsweise beide Puffer-Räume gemeinsam, insbesondere der gesamte Puffer-Schlitten, in der Höhe verlagerbar, sodass er beispielsweise unmittelbar vor oder nach dem Wechselvorgang in den oberen Bereich des Arbeitsraumes gefahren werden kann, und dort den Arbeitsbereich des Roboters möglichst wenig einschränkt.

Das Verfahren zum automatischen Wechseln des Werkzeuges an einem Roboter kann, insbesondere mit einer solchen Verpackungs-Maschine, insbesondere für alle Roboter einer Verpackungs-Maschine gleichzeitig, wie folgt ablaufen:
a) Ablegen eines von außerhalb der Verpackungs-Maschine herangeführten neuen Werkzeuges, automatisch oder manuell, im äußeren Puffer-Raum eines Werkzeug-Puffers, insbesondere in jedem der äußeren Puffer-Räume der verschiedenen Werkzeug-Puffer,
b) Verfahren des inneren Puffer-Raumes in Querrichtung und ggfs. auch in Höhenrichtung bis in den Greifbereich des Roboters, insbesondere bei jedem Werkzeug-Puffer, vorzugsweise gleichzeitig,
c) Ablegen des am Roboter montierten alten Werkzeuges automatisch durch den Roboter selbst im ihm zugewandten inneren Puffer-Raum, insbesondere bei jedem Roboter und/oder jedem Werkzeug-Puffer, vorzugsweise gleichzeitig,
d) dann Bewegen, insbesondere Drehen, zumindest des bisherigen, noch äu-ßeren ggfs. zusammen mit dem bisherigen noch inneren Puffer-Raum, sodass der mit dem neuen Werkzeug bestückte äußere Puffer-Raum in den Arbeitsraum gelangt und zum inneren Puffer-Raum wird und mit seiner offenen Seite dem Roboter zugewandt ist, beispielsweise durch Drehen um eine aufrechte Schaltachse zwischen den Puffer-Räumen um einen Schalt-Winkel von 180°.

Dadurch wird der bisher innere Puffer-Raum mit dem alten Werkzeug nach außen, insbesondere nach Einnehmen der Puffer-Position des Werkzeug-Puffers nach außerhalb des Arbeitsraumes, gedreht und ist nun der äußere Puffer-Raum.

Auch dies vorzugsweise bei allen Robotern und/oder allen Werkzeug-Puffern vorzugsweise gleichzeitig.
e) Verfahren zumindest des inneren Puffer-Raumes in Querrichtung und/oder in Höhenrichtung bis in den Greifbereich des Roboters, insbesondere bei allen Robotern, vorzugsweise gleichzeitig.
f) Aufnehmen durch Ankoppeln des im inneren Puffer-Raum liegenden neuen Werkzeuges automatisch durch den Roboter selbst, insbesondere durch alle Roboter, vorzugsweise gleichzeitig.

Somit kann - komplette Bestückung der anfangs äußeren Puffer-Räume mit jeweils einem neuen Werkzeug vorausgesetzt - dieser Wechselvorgang von allen Robotern selbsttätig und vor allem gleichzeitig durchgeführt werden, während das zeitaufwendige
- Entnehmen der alten Werkzeuge aus den äußeren Puffer-Räumen und Verbringen in ein Werkzeug-Lager,
- Bestücken der äußeren Puffer-Räume mit einem neuen Werkzeug während des Betriebes der Maschine und ohne Totzeit nacheinander an den einzelnen Werkzeug-Puffern durchgeführt werden kann.

Insbesondere wird im Schritt d) der innere und der äußere Puffer-Raum, insbesondere gemeinsam mit einer, insbesondere beweglichen, Sicherheits-Wand dazwischen, um eine aufrecht stehende Schaltachse gedreht werden, insbesondere um 180°.

Vorzugsweise wird im Schritt b) ein Verfahren des inneren und/oder äußeren Puffer-Raumes, insbesondere des Puffer-Schlittens, in horizontaler Querrichtung und/oder in der Vertikalen durchgeführt.

Vorzugsweise erfolgen die Schritte b) bis f) automatisch und gesteuert, insbesondere gesteuert durch eine elektronische Steuerung.

Insbesondere wird im Schritt a), insbesondere nur im Schritt a), ein Puffer-Schlitten mit dem äußeren Puffer-Raum und der Sicherheits-Wand in der Puffer-Position positioniert, in der die Sicherheits-Wand einen Innenraum einer Übergabe-Station zum Arbeitsraum hin sicherheitstechnisch abgrenzt und der Innenraum nach außerhalb der Verpackungsmaschine hin offen ist, insbesondere durch eine geöffnete Außentür der Übergabe-Station.

Dabei sei klargestellt, dass in der Regel jedem Roboter ein eigener Werkzeug-Puffer mit innerem und äußeren Puffer-Raum zugeordnet ist, aber es sind auch Lösungen denkbar, bei denen ein Werkzeug-Puffer mehrere, insbesondere zwei benachbarte, Roboter versorgt.

### c) Ausführungsbeispiele

Ausführungsformen gemäß der Erfindung sind im Folgenden beispielhaft näher beschrieben. Es zeigen:
- **Fig. 1:**: einen Ausschnitt aus einer Umsetzstraße in der Aufsicht nach dem Stand der Technik, mit mehreren Robotern einer ersten Bauform in Durchlaufrichtung hintereinander,
- **Fig. 2a, b:**: eine Umsetzstraße betrachtet in Durchlaufrichtung unter Verwendung einer zweiten Bauform von Robotern in zwei Varianten,
- **Fig. 3a, 4a:**: eine erfindungsgemäße Umsetzstraße mit einem Werkzeug-Puffer der zweiten Bauform der Roboter, betrachtet in Durchlaufrichtung und in der Aufsicht, beim Beladen des Werkzeug-Puffers mit einem neuen Werkzeug,
- **Fig. 3b, 4b:**: die Umsetzstraße gemäß Figur 3a, b beim Ablegen des alten Werkzeuges durch den Roboter im Werkzeug-Puffer,
- **Fig. 3c, 4c:**: die Umsetzstraße gemäß Figur 3a, b beim Hineindrehen des neuen Werkzeuges mittels des Werkzeug-Puffers in den Arbeitsraum des Roboters,
- **Fig. 3d, 4d:**: die Umsetzstraße gemäß Figur 3a, b beim Aufnehmen des neuen Werkzeuges durch den Roboter aus dem Werkzeug-Puffer,
- **Fig. 3e, 4e:**: die Umsetzstraße gemäß Figur 3a, b wobei der Roboter bereits mit dem neuen Werkzeug ausgestattet ist und dass Liefer-Fahrzeug das alte Werkzeug aus dem Werkzeug-Puffer abtransportiert.

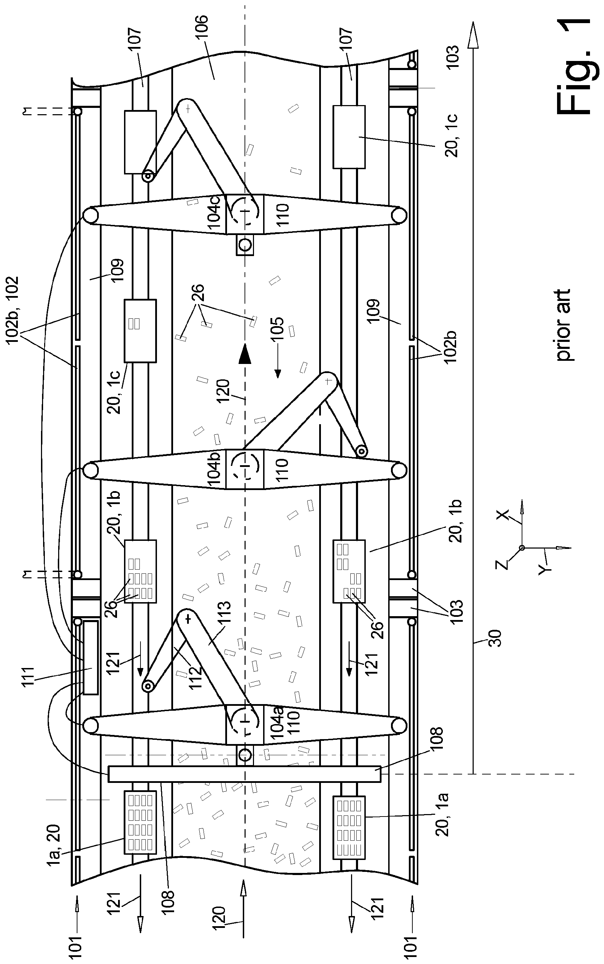

**Figur 1** zeigt in der Aufsicht einen Ausschnitt aus einer Verpackungsmaschine in Form einer Umsetzstraße, mittels der Produkte 26, die auf einem Produktband 106 unregelmäßig verteilt angeordnet angeliefert werden, mittels der Roboter in einer ersten Bauform von leichten Pickern 104a, b, mit vier Freiheitsgraden (X = Durchlaufrichtung, Y = horizontale Querrichtung hierzu, Z = Vertikale und Drehung um Z), die in einem bestimmten Längsabschnitt des Produktbandes 106 angeordnet sind, dem sogenannten Umsetzbereich 30, einzeln oder in Gruppen ergriffen und in definierten Positionen in den Behältern 20 abgelegt werden, die auf einer Behältertransportvorrichtung 107, die parallel zum Produktband 106 daneben läuft, abgelegt werden.

Die Picker 104a, b bestehen aus einem mindestens zweiteiligen Arm, nämlich Oberarm 113 und Unterarm 112, die gelenkig relativ zueinander um eine vertikale Achse verdrehbar sind, und wobei der Oberarm 113 ebenfalls um eine vertikale Achse an einer quer über die gesamte Umsetzstraße sich hinweg erstreckenden Brücke gelagert ist.

Am freien Ende des Unterarmes 112 ist ein Greifwerkzeug, in der Regel ein Saugkopf, zum Aufnehmen der Produkte 26 angeordnet, der z. B. in der Vertikalen Z ausfahrbar ist.

In diesem Fall ist beidseits des Produktbandes 106 je eine Behälter-Transportvorrichtung 107 vorhanden, und die Behälter-Transportvorrichtungen 107 bewegen sich in ihren Bewegungsrichtungen 121 mit den Behältern 20 vorzugsweise im Gegenlauf, also in Gegenrichtung zur Bewegungsrichtung 120 des Produktbandes 106.

Alle Picker 104a bis c der Umsetzstraße sind über eine gemeinsame Steuerung 111 miteinander verbunden, wobei vor allem der in Durchlaufrichtung der Behälter letzte Picker 104a die Bewegung der Behältertransportvorrichtung 107 steuert, denn er gibt einen gefüllten Behälter 20 zum Verlassen des Umsetzbereiches 30 nur dann frei, wenn dieser auch vollständig gefüllt ist.

Über die Steuerung 111 wissen die einzelnen Picker 104a, b auch, an welcher Position und zu welchem Zeitpunkt und in welcher Drehlage - sofern es sich nicht um in der Aufsicht rotationssymmetrische Produkte 26 handelt - ein Produkt 26 auf dem Produktband 106 zu finden ist, da dies am Einlauf des Produktbandes 106 in den Umsetzbereich 30 mittels einer Zeilenkamera 108 abgetastet wird und von der Steuerung 111 weitergerechnet wird, sodass jederzeit die Position jedes Einzelproduktes 26 bekannt ist trotz der in der Regel kontinuierlichen und gleich schnellen Bewegung des Produktbandes 106.

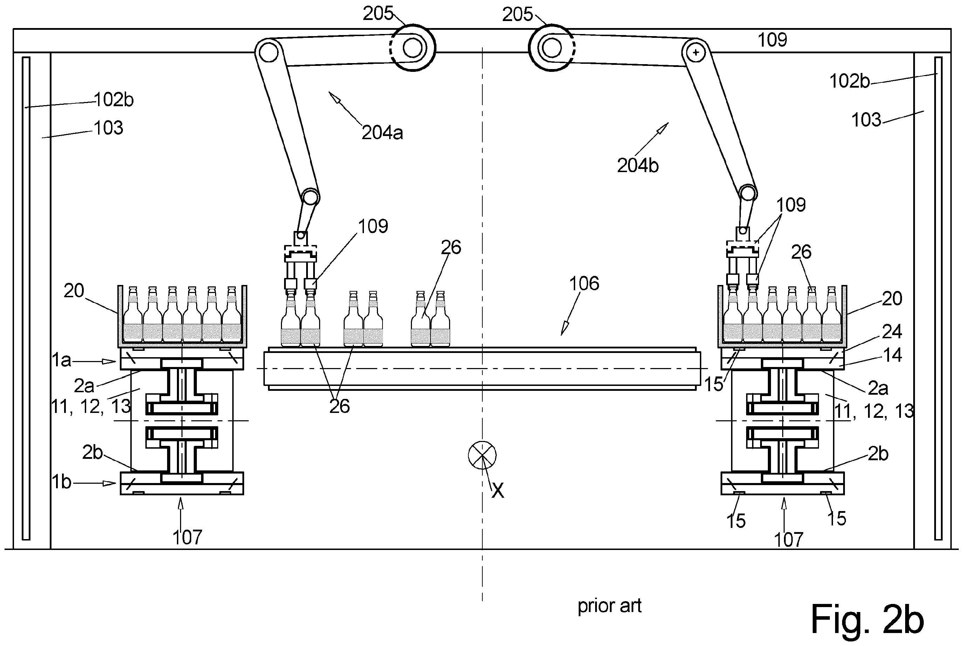

In **Figur 1** und **Figur 2b** wird eine Behälter-Transportvorrichtung 107 verwendet, auf der die Behälter 20 unabhängig voneinander verfahren werden können:
An einem Bahnkörper, der in diesem Fall aus in Transportrichtung 10 aneinander anschließenden Modulen 11, 12, 13 (siehe **Figur 2b**) besteht, sind auf der Oberseite als auch auf der Unterseite je eine Führungsbahn 2a, 2b ausgebildet, auf denen die Transportschlitten 1a, b, c und d, verfahren, auf denen jeweils ein oder mehrere Behälter 20 - je nach Größe - aufgesetzt und transportiert werden.

Im vorliegenden Fall werden die Behälter 20 auf dem Transportschlitten 1a, b... mittels Saugern 15 an der Oberseite der Schlitten 1a, b, c festgehalten.

Die Schlitten 1a, b, c können unabhängig voneinander angetrieben und gesteuert verfahren werden und somit unabhängig von den anderen Schlitten auf der gleichen Führungsbahn 2a, b und erst recht denjenigen der anderen Führungsbahn 2a, b entlang ihrer Führungsbahn bewegt werden.

Zu diesem Zweck verfügt in der Regel jeder Transportschlitten 1a, b über einen eigenen Motor.

Die Transportschlitten 1a bis d können von der oberen Führungsbahn 2a auf die untere Führungsbahn 2b gelangen, an der sie dann nach in diesem Beispiel unten hängend verfahren, wofür in aller Regel eine formschlüssige Führung an der momentan unteren Führungsbahn 2b erforderlich ist, um ein Herabfallen der Schlitten 1a... von der unteren Führung 2b zu vermeiden.

Die Verbringung von einer Führungsbahn zur anderen erfolgt über ein speziell ausgebildetes Modul des Bahnkörpers, hier das Anfangsmodul 11 und Endmodul 13 des Bahnkörpers, welches um seine Längsachse 10' gesteuert drehbar ist.

Ein Transportschlitten 1c, der auf diesem z. B. Endmodul 13 auf der oberen Führungsbahn 2a angekommen ist, wird angehalten und der Bahnkörper des Endmoduls 13 um 180° um die Längsachse 10' gedreht, so dass die Führungsbahn, auf der sich der Transportschlitten 1c befindet, nunmehr mit der unteren Führungsbahn 2b des angrenzenden - ein oder mehrfach vorhandenen - mittleren Moduls 12 und dessen Bahnkörper fluchtet, welches diese Drehbarkeit in aller Regel nicht aufweist.

So können die Schlitten 1a bis d, nachdem der vollständig gefüllte Behälter 20 von ihm abgenommen wurde, wie zuvor beschrieben, von der oberen auf die untere Führungsbahn 2b verbracht und dort zum Beginn der Umsetzstraße zurück verfahren werden.

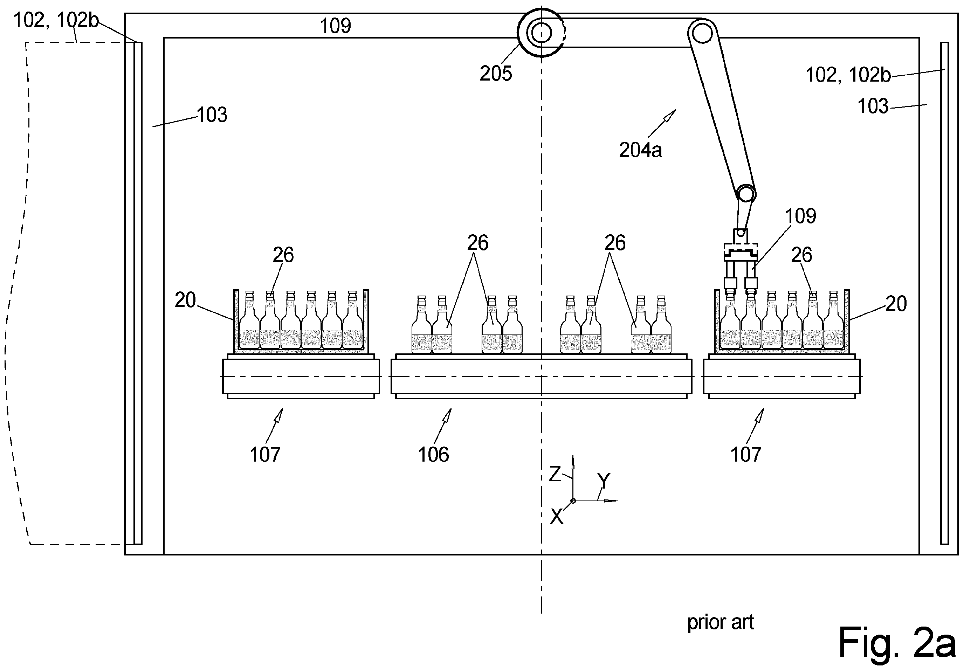

Die **Figuren 2a** **und b** zeigen - betrachtet in Transportrichtung 120 des Produktbandes 106 - eine Umsetzstraße, bei der die anhand der **Figuren 2a****-c** beschriebene Behälter-Transportvorrichtung 107 auf beiden Seiten des Produktbandes 106 benutzt wird, wobei in diesem Fall als Produkte 26 Flaschen umgesetzt werden müssen.

Ein weiterer wesentlicher Unterschied besteht darin, dass als Umsetzer anstelle der leichten Picker 104a, b schwerere Roboter 204a, b benutzt werden, die einen aus drei Armteilen zusammengesetzten Roboterarm besitzen, die jeweils um horizontale, in Transportrichtung gerichtete, und in diesem Fall nur zwei Freiheitsgrade (Y, Z) bewirkende, zueinander als auch gegenüber dem tragenden Maschinengestell der Umsetzstraße verschwenkbar sind.

Solche Roboterarme 105 sind wesentlich stärker dimensioniert als die Picker der Figur 1 und können größere Lasten tragen, in diesem Fall ein Werkzeug 109 zum Greifen mehrerer Produkte 26 in Form von Flaschen gleichzeitig.

In **Figur 2b** ist zu erkennen, dass jeder Roboter 204a, b eine der beidseitigen Behältertransportvorrichtungen 107 füllt und dementsprechend der Befestigungspunkt der Roboter 204a, b sich nicht über der Längsmitte des Produktbandes 106 befindet, sondern demgegenüber etwas nach außen versetzt. Natürlich ist auf jeder Seite der dargestellte Roboter 204a, b in Längsrichtung des Umsetzbereiches 30 mehrfach vorhanden.

Unabhängig davon ist in **Figur 2b** die Behälter-Transportvorrichtung 107 hier als Bahnmodul mit unabhängig voneinander darauf zu verfahrenden Schlitten 1a bis 1c, die jeweils einen Behälter 20 tragen, ausgebildet, wie anhand **Figur 1** beschrieben, während als Produktband 106 ein übliches Förderband dient.

In **Figur 2a** dagegen ist der Roboter 204a genau über der Längsmitte des Produktbandes 106 montiert, kann Produkte 26 an jeder Querposition des Produktbandes 106 aufnehmen und in Behältern 20 sowohl auf der linken als auch der rechten Behältertransportvorrichtung 107 einsetzen.

Unabhängig davon sind in **Figur 2a** außer dem Produktband 106 auch die Behälter-Transportvorrichtungen 107 als einfache, in Durchlaufrichtung laufende, Förderbänder ausgebildet.

Aus den bisher beschriebenen Figuren wird klar, dass am freien Ende des Umsetzers, also Pickers 104a, b oder Roboters 204a, b ein Werkzeug sitzt, welches häufig an das aktuell umzusetzende Produkt 26 angepasst werden muss.

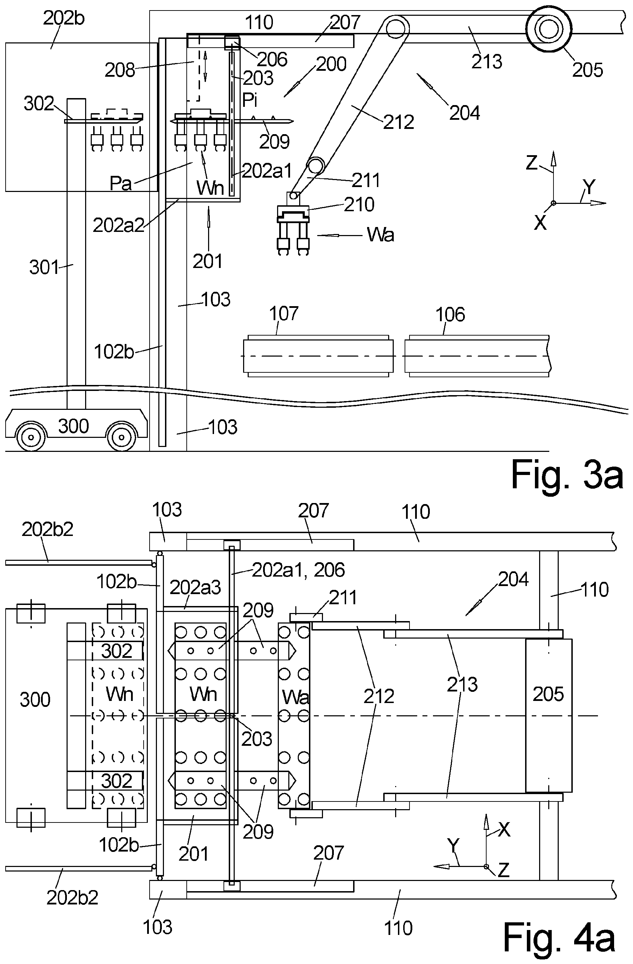

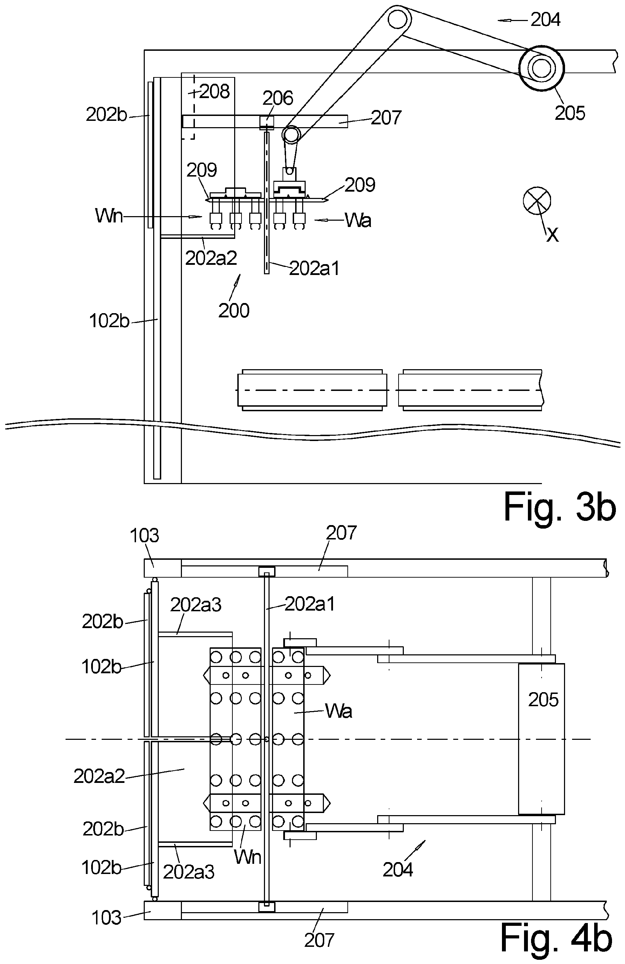

Um einen notwendigen Wechsel der Werkzeuge automatisch durchzuführen, wird bei einer Umsetzstraße gemäß **Figur 2a** - wie anhand der **Figuren 3a, 4a****,** **3b, 4b** usw. nachfolgend beschriebenen - vorgegangen, wobei es nicht darauf ankommt, ob als Umsetzer Picker 104a, b mit aufrechten Schwenkachsen zwischen den Armteilen benutzt werden, wie in den **Figur 1** dargestellt, oder Roboter 204a, b mit horizontalen Schwenkachsen zwischen den Armteilen wie in den Figuren 2a, b dargestellt.

Das Wesentliche besteht darin, dass in der Verpackungsmaschine 100, hier einer Umsetz-Straße 100, nun jedem Roboter 204 ein Werkzeug-Puffer 200 zugeordnet ist, der sich innerhalb der Verpackungsmaschine 100, insbesondere der Umsetz-Straße 100, befindet, und in dem ein neues Werkzeug Wn vorgehalten wird, welches der Roboter 204 sich im Zusammenspiel mit dem Werkzeug-Puffer 200 selbstständig und automatisiert holen und gegen sein an ihm befestigtes altes Werkzeug Wa tauschen kann.

Da das Beladen der einzelnen Werkzeug-Puffer 200 - in der Regel ist jedem Roboter 204 ein eigener Werkzeug-Puffer 200 zugeordnet, der ihn versorgt, nur in seltenen Fällen wird ein Werkzeug-Puffer 200 mehrere, z.B. zwei benachbarte Roboter 204a, b versorgen - mit neuen Werkzeugen Wn von au-ßen, beispielsweise automatisiert mittels eines Lieferfahrzeuges 300, während des regulären Betriebes der Verpackungsmaschine 100 erfolgen kann, können bei einem notwendigen Werkzeugwechsel alle wechselnden Roboter 204, in der Regel alle Roboter 204 der Verpackungsmaschine 100, gleichzeitig selbsttätig und automatisch ihr Werkzeug wechseln, wodurch die Totzeit der Verpackungsmaschine 100 für den Werkzeug-Wechsel sehr gering gehalten werden kann.

Die **Figuren 3a, 4a** zeigen betrachtet in Durchlaufrichtung X sowie in der Aufsicht von oben die Ausgangssituation, in der sich am Roboter 204 noch das bisher im Einsatz befindliche alte Werkzeug Wa befindet.

Der Roboter 204 ist mit seiner Roboter-Basis 205 an einem der Gestell-Querträger 110 des Maschinengestells 101 befestigt, die die oberen Enden von je vier, in der Aufsicht im Rechteck angeordneten, Gestell-Säulen 103 in Querrichtung Y verbinden, während Gestell-Längsträger 109 die in Längsrichtung X beabstandeten Gestell-Säulen 103 in Längsrichtung, der Durchlaufrichtung X, miteinander verbinden.

Die Längsträger 109 und die Querträger 110 sind meist ebenso wie die Säulen 103 hohl ausgebildet, sodass darin Leitungen, Steuerungen und Ähnliches untergebracht werden können.

Gemäß **Figur 3a** befindet sich der Werkzeug-Puffer 200 in Durchlaufrichtung X betrachtet in einer der oberen äußeren Ecken des Arbeitsraumes der Verpackungsmaschine 100, der von einem Sicherheitsgehäuse 102 begrenzt wird, welches primär aus in Durchlaufrichtung X zwischen je zwei Gestell-Säulen 103 eines Gestell-Moduls angeordneten Paaren von Sicherheit-Türen 102b des Maschinengestells 101 besteht, die im geschlossenen Zustand das Eintreten oder auch nur Hineingreifen in den Arbeitsraum unmöglich machen, aber aufgrund ihrer Transparenz vollständigen Einblick auf das Geschehen im Arbeitsraum zulassen.

Die Stirnseiten des kanalartigen oder tunnelartigen Arbeitsraumes innerhalb des Maschinengestells 101, welches aus in Durchlaufrichtung X mehreren aneinandergereihten Gestell-Modulen besteht, sind meist durch querstehende, oft fix montierte Sicherheit-Wände 102a verschlossen.

Die Oberseite des Arbeitsraumes, also zwischen den Gestell-Längsträgern 109 und den Gestell-Querträger 110, ist dagegen offen, da ein Einsteigen einer Person von oben in den Arbeitsraum äußerst unwahrscheinlich ist.

Ein wesentlicher Aspekt des Werkzeug-Puffers 200 besteht darin, dass dieser während des Betriebes der Werkzeugmaschine 100 in seinem Bereich ebenfalls den Arbeitsraum sicherheitstechnisch begrenzt, also Teil des Sicherheitsgehäuses 102 ist.

Zu diesem Zweck umfasst der Werkzeug-Puffer 200
- einerseits eine Übergabe-Station 201, deren Innenraum durch zumindest eine bodenseitige Sicherheit-Wand 202a2 und stirnseitig, also in Längsrichtung X, durch jeweils eine vertikal stehende und in Querrichtung Y verlaufende Sicherheit-Wand 202a3 sowie eine die Außenseite des Innenraumes verschließende Sicherheit-Tür 202b, die Außen-Tür 202b, sicherheitstechnisch begrenzt ist,
- andererseits einen Puffer-Schlitten als bewegliches Teil mit einer aufrecht stehenden Sicherheit-Wand 202a1, von der in beide Richtungen jeweils mindestens eine, in diesem Fall je zwei nebeneinander beanstandete, Werkzeug-Ablagen 209 vorstehen, auf denen ein Werkzeug abgelegt werden kann.

In der in **Figur 3a, 4a** dargestellten Ausgangsstellung, der Puffer-Position, des Puffer-Schlittens verschließt diese Sicherheit-Wand 202a1 den Innenraum der Übergabestation 201 auf der Innenseite, also zum Arbeitsraum hin und ist dann Teil des Sicherheit-Gehäuses 102, sodass der bezüglich des Arbeitsraumes auf der Außenseite diese Sicherheit-Wand 202a1 liegende äußere Pufferraum Pa, der sich nun im Innenraum der Übergabe-Station 201 befindet, außerhalb des Sicherheit-Gehäuses 102 liegt.

Dementsprechend kann trotz Betriebes der Verpackungsmaschine die Außentür 202b geöffnet werden, um - zum Beispiel mittels eines LieferFahrzeuges 300 nach Art eines etwa autonom fahrenden Hub-Staplers mit einer entlang einer Hubsäule 301 in der Höhe verstellbaren Tragvorrichtung 302 für ein Werkzeug - möglichst automatisiert im äußeren Pufferraum Pa auf der dortigen Werkzeug-Ablage 209 ein vom Roboter 204 benötigtes neues Werkzeug Wn abzulegen.

Die Außentür 202b ist dabei an der Außenseite einer Sicherheitstür 102b - die zu diesem Zweck eine Durchgangsöffnung zum Hindurchbewegen eines Werkzeuges aufweist, welche durch die Außentür 202b verschlossen werden kann - gelenkig befestigt, die über die gesamte Höhe des Arbeitsraumes durchgehend am Maschinengestell, also insbesondere einer der Gestell-Säulen 103, befestigt ist.

Bevorzugt ist der Abstand zwischen zwei Gestell-Säulen 103 durch zwei Sicherheit-Türen 102b, also eine zwei-flügelige Tür, verschlossen, und auch die Außentür 202b ist dementsprechend zwei-flügelig ausgebildet mit jeweils einem Flügel an jeweils einem Flügel, der Sicherheits-Türen 102b, wobei sich vorzugsweise die Fugen zwischen den zwei Flügeln der beiden zwei Flüge liegen Türen decken. Die Durchgangsöffnung zum Hindurchbewegen eines Werkzeuges ist vorzugsweise konzentrisch zur Fuge in den 2- zweiflügeligen Türen angeordnet, geht aber zumindest über die Fuge hinweg.

Auch die bodenseitige Sicherheitswand 202a2, also jeweils eine Hälfte hiervon, ist an jeder der beiden Gestell-seitigen Sicherheits-Türen 102b befestigt, und ebenso jeweils eine der stirnseitigen, aufrechten Sicherheits-Wände 202a3, die den Innenraum der Übergabe-Station begrenzen.

Im Falle des Öffnens der Gestell-seitigen Sicherheitstür 102b ist dadurch ein optimal großer Zugang für Wartungsarbeiten und Ähnliches ins Innere der Verpackungsmaschine, also in den Arbeitsraum hinein, gegeben.

Nach Wegfahren des Lieferfahrzeuges 300 wird die Außentür 202b des Werkzeug-Puffers 200 geschlossen, die damit zum Bestandteil des geschlossenen Sicherheitsgehäuses 102 wird.

Dann oder auch schon vorher kann gemäß der **Figuren 3b, 4b** der Roboter 204 sein noch an ihm befestigtes altes Werkzeug Wa auf der Werkzeugablage 209 des inneren Pufferraumes Pi, die also von der vertikalen Sicherheitswand 202a1 momentan nach innen absteht, definiert positioniert ablegen und sich danach ohne Werkzeug, nur mit dem immer an der Roboter-Hand 211 verbleibenden Werkzeug-Träger 210 - der zu jedem Werkzeug passt - wieder wegbewegen.

Da sich der der Puffer-Schlitten des Werkzeug-Puffers 200 in der Normalstellung jedoch häufig weit oben und außen im Arbeitsraum befindet, wie in **Figur 3a, 4a** dargestellt, kann der Roboter 204 mit seinem alten Werkzeug Wa das Ablegen des alten Werkzeuges in dieser Position des Puffer-Schlittens und seiner Werkzeug-Ablagen 209 häufig nicht durchführen.

Vielmehr müssen die Werkzeug-Ablage 209 des inneren Puffer-Raumes Pi, die in den Arbeitsraum hineinragt, erst durch Verlagern des Puffer-Schlittens nach unten und/oder in Richtung Längsmitte des Maschinengestells 101, also in Richtung Roboterbasis 205, in eine Wechsel-Position, die für den Roboter 204 erreichbar ist, gebracht werden.

Zu diesem Zweck ist die vertikale Sicherheitswand 202a1 - die Bestandteil des Puffer-Schlittens ist - an einer Längstraverse 206 aufgehängt, die in Durchlaufrichtung X verläuft und mit ihren beiden Enden in jeweils einer in Querrichtung Y verlaufenden Querführung 207 in die gewünschte Position verfahren werden kann, wodurch sie den Innenraum der Übergabe-Station 201 jedoch nicht mehr verschließt und in diesem Zustand nicht mehr Bestandteil des Sicherheits-Gehäuses 102 ist.

Die Höhenlage dagegen kann verändert werden, in dem die Querführung 207 mittels einer Hubvorrichtung 208 in der Höhe gesteuert verfahren werden kann.

Es versteht sich von selbst, dass im Sinne einer kinematischen Umkehrung stattdessen auch die Sicherheitswand 202a1 an der Hubvorrichtung 208 befestigt sein kann, und diese entlang der Querführung 207 verfahren werden kann.

Nachdem eine solche Wechsel-Position des Puffer-Schlittens und damit der nach innen gerichteten Werkzeug-Ablage 209 erreicht ist, legt der Roboter 204 sein altes Werkzeug Wa darauf ab und löst sich vom Werkzeug.

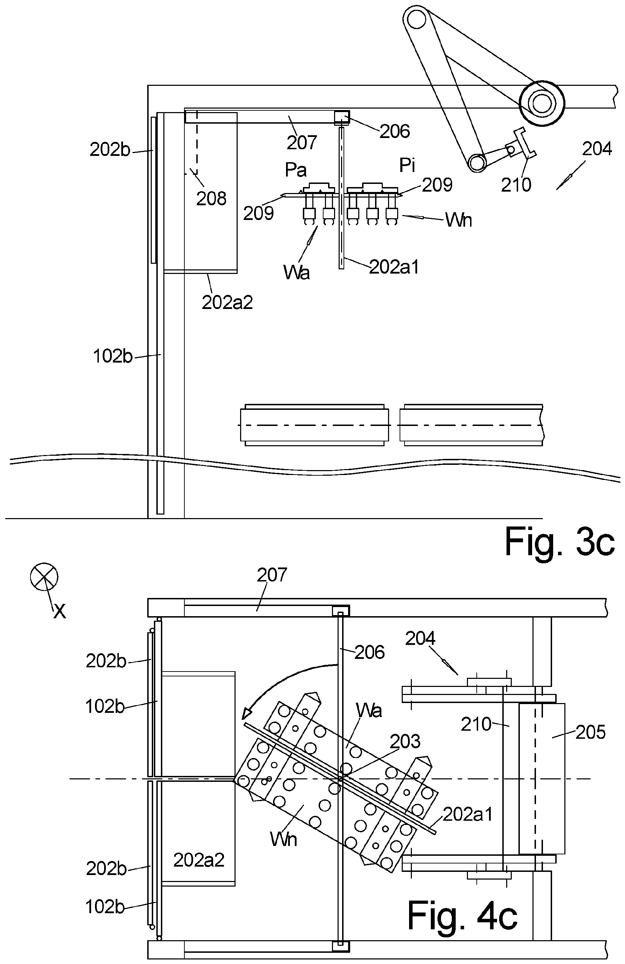

Wie aus **Figur 3c, 4c** ersichtlich, kann die Sicherheitswand 202a1 zusätzlich um eine vertikal stehende Schaltachse 203, die sich in der Mitte ihrer in der Aufsicht betrachteten Längserstreckung befindet, relativ zur Längstraverse 206 gesteuert gedreht werden, und zwar um insbesondere mindestens 180°.

Nach einer solchen 180° Drehung - die gemäß **Figur 4c** erst begonnen hat, gemäß **Figur 3c** jedoch bereits beendet ist - weist die ursprünglich nach außen gerichtete Werkzeug-Ablage 209 nun nach innen und umgekehrt, sodass auch die darauf liegenden Werkzeuge ihre Position getauscht haben, also sich nun - siehe **Figur 3c** - das alte Werkzeug Wa auf der Außenseite, also im äußeren Pufferraum Pa, und das neue Werkzeug Wn auf der Innenseite der gedrehten Sicherheitswand 202a1, also im inneren Pufferraum Pi, befinden.

Hierzu musste vorher jedoch die Sicherheitswand 202a1 mithilfe der Querführung 207 und ggfs. auch der Hubvorrichtung 208 automatisch und gesteuert in eine solche Dreh-Position gebracht werden, dass bei Drehung der Sicherheitswand 202a1 keine Kollision eintreten kann, weder mit den übrigen Teilen des Werkzeug-Puffers 200, insbesondere der horizontalen Sicherheitswand 202a2, noch dem Roboter 204, der hierfür ebenfalls vor der Drehung eine entsprechend weit von der sich drehenden Sicherheitswand 202a1 entfernte Anti-Kollisions-Position einnehmen muss.

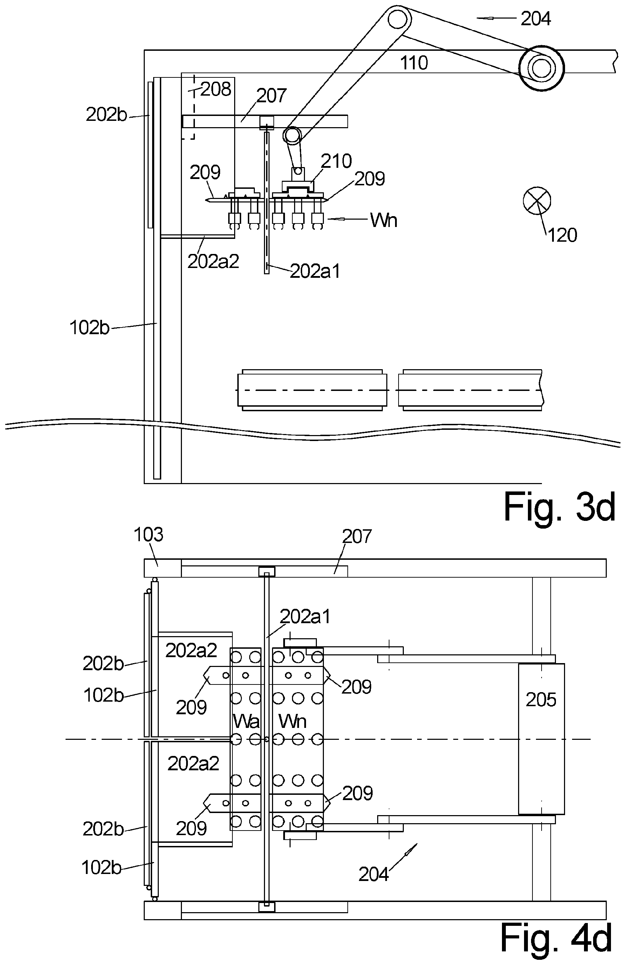

Anschließend wird gemäß der **Figuren 3d, 4d** die Sicherheitswand 202a1 - bei geschlossener oberer Sicherheitstür 202b des Werkzeug-Puffers 200 - wieder in Höhe und Querrichtung in die Wechsel-Position verfahren, in der der Roboter 204 das im inneren Pufferraum Pi, also von der Sicherheitswand 202a1 nach innen ragenden Werkzeug-Ablage 209, abgelegte neue Werkzeug Wn selbsttätig und automatisch ergreifen und ankuppeln kann und vom Werkzeug-Puffer 200 abnehmen kann, denn an der Kontaktseite, meist der Oberseite, des Werkzeuges sind alle Werkzeuge passend zu dem am Roboter verbleibenden Werkzeug-Träger 210 ausgebildet.

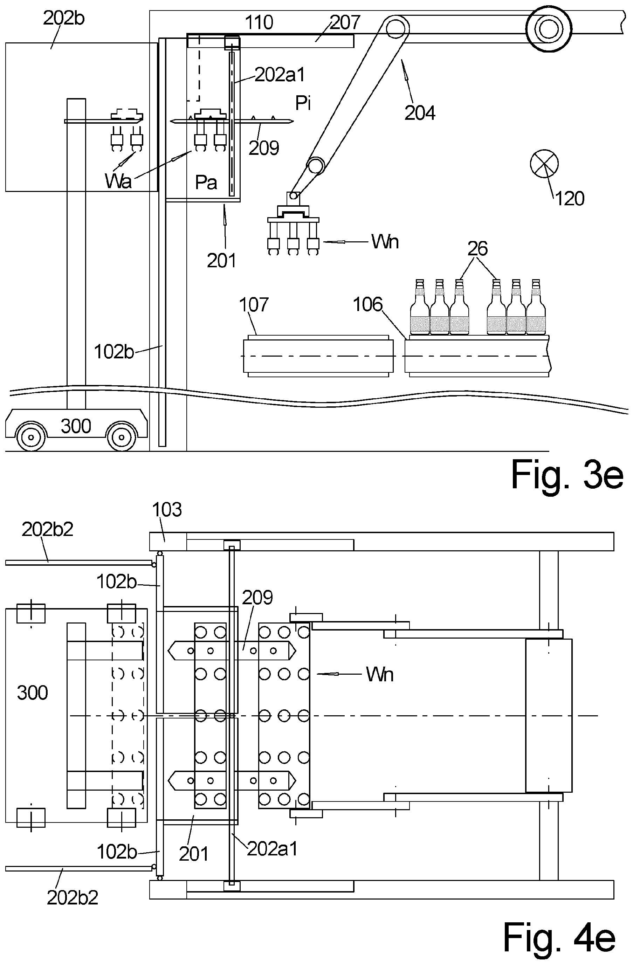

Sobald der Roboter 204 das neue Werkzeug Wn angekoppelt und von der Werkzeug-Ablage 209 abgenommen hat, bewegt sich gemäß der **Figuren 3e, 4e** der Puffer-Schlitten, also einschließlich der Sicherheitswand 202a1 und der Werkzeug-Ablagen 209, wieder in die Ausgangsstellung, die Puffer-Position, gemäß **Figur 3a, 4a** zurück, in der das Sicherheitsgehäuse 102 wieder Mittels der in der Puffer-Position befindlichen Sicherheitswand 202a1 geschlossen ist, auch wenn die oberen Sicherheitstüren 202b danach geöffnet werden.

Letzteres ist notwendig, damit gemäß der **Figuren 3e, 4e** das Lieferfahrzeug 300 das nun im äußeren Pufferraum Pa auf den Werkzeug-Auflagen 209 abgelegte alte Werkzeug Wa automatisch abnehmen und abtransportieren kann, was bereits im wieder laufendem Umsetz-Betrieb der Verpackungsmaschine 100 und insbesondere des mit dem neuen Werkzeug Wn bestückten Roboters 204 erfolgen kann.

### BEZUGSZEICHENLISTE

- 1a, b: Transportschlitten
- 2a, b: Führungsbahn

- 10': Längsachse
- 11: Bahnkörper; Anfangsmodul
- 12: Bahnkörper; mittleres Modul
- 13: Bahnkörper; Endmodul
- 14: Führungsteil
- 15: Sauger

- 20: Behälter

- 30: Umsetzbereich

- 100: Verpackungsmaschine
- 101: Maschinengestell
- 102: Sicherheitsgehäuse
- 102a: Sicherheits-Wand
- 102b: Sicherheits-Tür
- 103: Gestell-Säule
- 104a, b: Picker
- 105: Pickerarm
- 106: Produktband
- 107: Behälter-Transportvorrichtung,
- 108: Zeilenkamera
- 109: Gestell-Längsträger
- 110: Gestell-Querträger
- 111: Steuerung
- 112: Unterarm
- 113: Oberarm

- 120: Transportrichtung Produktband
- 121: Transportrichtung Behälterband

- 200: Werkzeug-Puffer
- 201: Übergabe-Station
- 202a: Sicherheits-Wand
- 202a1/2/3: Sicherheit-Wand
- 202b: Sicherheits-Tür
- 203: Schaltachse
- 204a, b: Roboter
- 204: Roboter
- 205: Roboter-Basis
- 206: Längstraverse
- 207: Quer Führung
- 208: Hubvorrichtung
- 209: Werkzeug-Ablage
- 210: Werkzeug-Träger
- 211: Hand, Roboter-Hand
- 212: Unterarm
- 213: Oberarm

- 300: Lieferfahrzeug
- 301: Hubsäule
- 302: Tragvorrichtung

- Wa: altes Werkzeug
- Wn: neues Werkzeug
- X: Durchlaufrichtung
- Y: horizontale Querrichtung
- Z: Vertikale

## Patentansprüche

1. **Verpackungsmaschine** (100) mit
- einem Maschinengestell (101),
- einem Sicherheitsgehäuse (102) mit am Maschinengestell (101) befestigten Sicherheits-Wänden (102a) und Sicherheits-Türen (102b), welches den Arbeitsraum der Verpackungsmaschine (100) umgibt,
- wenigstens einem mit einem Werkzeug (Wa, Wn) bestückbaren Roboter (204) im Inneren des Arbeitsraumes,
- einem Werkzeug-Puffer (200), in dem wenigstens ein momentan nicht am Roboter (204a, b) montiertes Werkzeug (Wa, Wn) zwischengelagert werden kann,
**dadurch gekennzeichnet, dass**
- der Werkzeug-Puffer (200) einen bezüglich des Arbeitsraumes inneren und einen äußeren Puffer-Raum (Pi, Pa) mit je einer Werkzeug-Ablage (209) zur Aufnahme je mindestens eines Werkzeuges (Wa, Wn) aufweist,
- wobei der Werkzeug-Puffer (200) so ausgebildet ist, dass innerer und äußerer Puffer-Raum (Pi, Pa) ihre Position verändern können, insbesondere der innere Puffer-Raum (Pi) die Position des äußeren Puffer-Raumes (Pa) einnehmen kann und umgekehrt,
- wobei der innere Puffer-Raum (Pi) relativ zum Roboter (204) so positioniert werden kann, dass er innerhalb des Greifbereiches des Roboters (204) liegt,
- der Werkzeug-Puffer (200) mindestens eine Sicherheits-Wand (202a), insbesondere eine bewegliche Sicherheit-Wand (202a1) und/oder eine Sicherheit-Tür (202b) als Bestandteil des Sicherheitsgehäuses (102) aufweist, insbesondere zum Begrenzen des aktuell inneren, im Arbeitsraum liegenden, Puffer-Raumes (Pi) nach außen.

2. Verpackungsmaschine nach Anspruch 1,
**dadurch gekennzeichnet, dass**
- der Werkzeug-Puffer (200) als Sicherheit-Tür (202b) eine Außentür (202b) aufweist, der den äußeren Pufferraum (Pa) nach außen verschließt.
(Bahnhof:)

3. Verpackungsmaschine nach einem der vorhergehenden Ansprüche, **dadurch gekennzeichnet, dass**
- die Sicherheits-Wand (202a) und/oder die Sicherheits-Tür (202b), insbesondere Außentür (202b), des Werkzeug-Puffers (200) den Innenraum einer Übergabe-Station (201), in die der äußere Puffer-Raum (Pa) von der Innenseite her einfahrbar ist, sicherheitstechnisch begrenzen,
- wobei die Sicherheits-Wand (202a) entweder an einer Sicherheits-Tür (102b) des Maschinengestells (101) oder an einer Außentür (202b) des Werkzeug-Puffers (200) oder direkt am Maschinengestell (101) befestigt ist.

4. Verpackungsmaschine nach einem der vorhergehenden Ansprüche, **dadurch gekennzeichnet, dass**
- die Sicherheits-Tür (202b), insbesondere Außentür (202b), des Werkzeug-Puffers (200) an einer Sicherheits-Tür (102b) des Maschinengestells (101) oder direkt am Maschinengestell (101) befestigt ist.
(Bewegungsmöglichkeiten Puffer-Räume:)

5. Verpackungsmaschine nach einem der vorhergehenden Ansprüche,
**dadurch gekennzeichnet, dass**
- die Roboter-Basis (205) ortsfest am Maschinengestell (101) montiert ist,
- zumindest der innere Puffer-Raum (Pi), insbesondere innerer und äu-ßerer Puffer-Raum (Pi, Pa) gemeinsam, vorzugsweise einschließlich deren Werkzeug-Ablagen (209), insbesondere mit der beweglichen Sicherheit-Wand (202a1) dazwischen, in Querrichtung (X) und/oder Höhenrichtung (Z) bewegbar am Maschinengestell (101) befestigt ist,
- insbesondere die bewegliche Sicherheit-Wand (202a1) mit den daran befestigten beidseitigen Werkzeug-Ablagen (209) den nur im ganzen beweglichen Puffer-Schlitten bilden.

6. Verpackungsmaschine nach einem der vorhergehenden Ansprüche, **dadurch gekennzeichnet, dass**
- innerer und äußerer Puffer-Raum (Pi, Pa), insbesondere gemeinsam, insbesondere mit der beweglichen Sicherheit-Wand (202a1) dazwischen, drehbar um eine zwischen innerem und äußerem Puffer-Raum (Pi, Pa) angeordnete aufrechte Schalt-Achse (203) sind.

7. Verpackungsmaschine nach einem der vorhergehenden Ansprüche,
**dadurch gekennzeichnet, dass**
- innerer und äußerer Puffer-Raum (Pi, Pa) relativ zueinander in der Höhe (Z) und/oder in der Querrichtung (Y) zur Durchlaufrichtung (X, 120) durch die Maschine (100) bewegbar sind
oder
- innerer und äußerer Puffer-Raum (Pi, Pa) in Durchlaufrichtung (120) hintereinander liegen und, insbesondere gemeinsam, in Durchlaufrichtung (X, 120) bewegbar sind.

8. Verpackungsmaschine nach einem der vorhergehenden Ansprüche, **dadurch gekennzeichnet, dass**
der innere Puffer-Raum (Pi), insbesondere dessen Werkzeug-Ablage (209), zwischen
- einer Wechsel-Position, in der er sich innerhalb des Arbeitsraumes im Greifbereich des Roboters (204) befindet, sodass insbesondere der Roboter (204) ein im inneren Pufferraum befindliches neues Werkzeug (Wn) aufnehmen kann oder ein am Roboter (204) montiertes altes Werkzeug (Wa) im inneren Puffer-Raum (Pi) ablegen kann, und
- einer Puffer-Position, in der er sich innerhalb des Arbeitsraumes, also der Sicherheitsgehäuse (102), aber außerhalb des Greifbereiches des Roboters (204) befindet,
hin und her bewegt werden kann.

9. Verpackungsmaschine nach einem der vorhergehenden Ansprüche, **dadurch gekennzeichnet, dass**
- eine, insbesondere bewegliche, Sicherheitswand (202a1) zwischen dem inneren und äußeren Puffer-Raum (Pi, Pa) angeordnet ist,
- eine aufrechte, gesteuert antreibbare, Schaltachse (203), insbesondere im Bereich zwischen innerem und äußerem Puffer-Raum, insbesondere durch die bewegliche Sicherheitswand (202a1) verlaufend, vorhanden ist.

10. Verpackungsmaschine nach einem der vorhergehenden Ansprüche, **dadurch gekennzeichnet, dass**
- der Innere und äußere Pufferraum (Pi, Pa), insbesondere mit der beweglichen Sicherheit-Wand (202a1) dazwischen, unter einer in Durchlaufrichtung verlaufenden Längstraverse (206) angeordnet sind,
- die Längstraverse (206) mit ihren beiden Enden in vorzugsweise jeweils einer in Querrichtung (Y) verlaufenden Quer-Führung (207) gesteuert verfahrbar ist.

11. Verpackungsmaschine nach einem der vorhergehenden Ansprüche, **dadurch gekennzeichnet, dass**
der innere Pufferraum (Pi) eine zu öffnende Innentür aufweist zur Abtrennung vom Arbeitsraum.

12. Verpackungsmaschine nach einem der vorhergehenden Ansprüche, **dadurch gekennzeichnet, dass**
der innere und/oder der äußere Pufferraum (Pi, Pa), insbesondere gemeinsam, in der Höhe mittels einer Hubvorrichtung (208) verlagerbar sind
- zwischen einer oberen Puffer-Position, in der der Roboter (204) aufgrund der Höhenlage den inneren Pufferraum (Pe) nicht erreichen kann, und
- einer unteren Wechsel-Position, in der der Roboter aufgrund der Höhenlage den inneren Puffer-Raum (Pi) erreichen kann, wenn sich dieser auch in Querrichtung (Y) innerhalb des Greifbereichs des Roboters (204) befindet.

13. **Verfahren** zum automatischen Wechseln des Werkzeuges (Wa, Wn) an einem Roboter (204) einer Verpackungsmaschine (100), insbesondere einer Verpackungsmaschine (100) nach einem der vorhergehenden Ansprüche,
**dadurch gekennzeichnet, dass**
das Verfahren folgende Schritte umfasst:
a) Ablegen, insbesondere automatisches Ablegen, eines neuen Werkzeuges (Wn) im äußeren Puffer-Raum (Pa) eines Werkzeug-Puffers (200),
b) Verfahren zumindest des inneren Puffer-Raumes (Pi) des Werkzeug-Puffers (200) in Querrichtung (Y) bis in den Greifbereich des Roboters (204),
c) Ablegen des am Roboter montierten alten Werkzeuges (Wa) im inneren Puffer-Raum (Pi),
d) Bewegen zumindest des noch äußeren Puffer-Raumes (Pa) so, dass der mit dem neuen Werkzeug (Wn) bestückte, nun innere Pufferraum (Pi) mit seiner offenen Seite dem Roboter (204) zugewandt ist,
e) Verfahren zumindest des nun inneren Puffer-Raumes (Pi) in Querrichtung (Y) bis in den Greifbereich des Roboters (204),
f) Aufnehmen des im inneren Pufferraum (Pi) liegenden neuen Werkzeuges (Wn) durch den Roboter (204.

14. Verfahren nach Anspruch 13,
**dadurch gekennzeichnet, dass**
- im Schritt d) der innere und der äußere Puffer-Raum (Pi, Pa), insbesondere gemeinsam mit einer, insbesondere beweglichen, Sicherheit-Wand (202a1) dazwischen, um eine aufrecht stehende Schaltachse (203) gedreht werden, insbesondere um 180°
und/oder
- im Schritt b) ein Verfahren in Querrichtung (Y) und/oder in der Vertikalen (Z) erfolgt
und/oder
- die Schritte b) bis f) automatisch und gesteuert, insbesondere durch eine elektronische Steuerung, erfolgen.

15. Verfahren nach einem der vorhergehenden Verfahrensansprüche, **dadurch gekennzeichnet, dass**
im Schritt a), insbesondere nur im Schritt a), ein Puffer-Schlitten mit dem äußeren Puffer-Raum (Pa) und der Sicherheit-Wand (202a1) sich in der Puffer-Position positioniert wird, in der die Sicherheit-Wand (202a1) einen Innenraum einer Übergabe-Station (201) zum Arbeitsraum hin sicherheitstechnisch abgrenzt und der Innenraum nach außerhalb der Verpackungsmaschine hin offen ist, insbesondere durch eine geöffnete Außentür (202b) der Übergabe-Station (201).
